# EUROPEAN PATENT SPECIFICATION

(11) **EP 3 945 100 B1**
(45) Date of publication and mention of the grant of the patent: **30.10.2024**
(21) Application number: 21188305.3
(22) Date of filing: 28.07.2021
(51) Int. Cl.: C08F 220/54, C08K 3/34, C08K 5/17, A61L 31/04, A61L 31/14, B29C 64/112, B33Y 70/00, B33Y 80/00

(54) **COMPOSITION FOR HYDROGEL SOLID FREEFORM FABRICATION, METHOD OF FABRICATING HYDROGEL SOLID FREEFORM FABRICATION OBJECT, AND SET**
ZUSAMMENSETZUNG ZUR HERSTELLUNG VON HYDROGEL-FESTSTOFF-FREIFORM, VERFAHREN ZUR HERSTELLUNG EINES FESTSTOFFFREIFORMHYDROGELERZEUGNISSES UND SET
COMPOSITION POUR LA FABRICATION DE FORMES LIBRES SOLIDES D'HYDROGEL, PROCÉDÉ DE FABRICATION D'OBJET DE FABRICATION DE FORMES LIBRES SOLIDES D'HYDROGEL ET ENSEMBLE

(30) Priority: 31.07.2020 JP 2020130634
(43) Date of publication of application: 02.02.2022
(73) Proprietor: Ricoh Company, Ltd., Tokyo 143-8555 (JP)
(72) Inventor: Niimi, Tatsuya, Tokyo, 143-8555 (JP); Matsumura, Takashi, Tokyo, 143-8555 (JP); Saito, Takuya, Tokyo, 143-8555 (JP)
(74) Representative: Marks & Clerk LLP

(56) References cited:
- US-A1- 2017 008 228
- US-A1- 2017 270 831

## Description

### Technical Field

The present disclosure is related to a composition for hydrogel solid freeform fabrication, a method of fabricating a hydrogel solid freeform fabrication object, and a set of compositions for hydrogel solid freeform fabrication.

### Description of the Related Art

Since hydrogels contain a large quantity of water and are close to the compositions of human bodies, their physical properties and sense of touch are close to those of human bodies. Such hydrogels are expected as material for medical models reproducing internal organs and skin and have been researched in various ways. Every part of a human body can be a subject of a medical model, the material constituting such a model is expected to have various properties. However, a single material cannot satisfy all the purposes. There are two ways of solving this issue; one is to use a single material with different compositions; the other is to combine different types of materials. In either way, there is need for reproducing the sense of touch by controlling properties.

Typical hydrogel can reproduce an extremely soft sense of touch like that of agar. However, the materials used are mostly fragile so that it is not possible to use all the hydrogel as the medical model. PVA gel, which is manufactured by repeating freezing and defrosting polyvinyl alcohol (PVA) gel, and three-dimensionally cross-linked hydrogel (organic inorganic composite hydrogel) that contains clay mineral are useful hydrogels.

A tough hydrogel that has a polyethylene glycol chain in a branch structure or network structure and excellent tensile strength has been proposed in Japanese Unexamined Patent Application Publication No. 2011-057962 as medical model as three-dimensionally cross-linked hydrogel that contains a clay mineral.

Medical models have a variety of shapes from simple one like skin to complex one like a heart. In addition to properties, reproduction of shapes is required for a model that reproduces a focus of an individual patient. Additive manufacturing (AM) is known as three-dimensional printing to reproduce such a real shape. This technology calculates the cross-sections sliced along the lamination direction of an object and forms and laminates respective layers according to the shape of the cross-sections to fabricate the object. This technology includes fused deposition molding (FDM), inkjetting, binder jetting, material jetting, stereo lithography apparatus (SLA), and a powder selective laser sintering (SLS). Another method of fabricating a three-dimensional object has been developed, which forms a single layer formed of a photocurable liquid compound at a necessary portion followed by curing and repeating the forming and curing to create a laminate structure.

A device for fabricating a three-dimensional object has been proposed in Japanese Patent No. 5408207 (Japanese Unexamined Patent Application Publication No. 2013-043409) which can fabricate an object by laminating a fabrication material in accordance with the filling ratio representing the degree of density or mixing ratio and varying the mass per region or part depending on the difference of fabrication material.

Another device for fabricating a three-dimensional object has been proposed in United States Patent No. 5059266, which includes multiple inkjet heads including a head for discharging a material for forming a large part of an object and a head for discharging a material for forming a small part of the object.

A yet another device for fabricating a three-dimensional object has been proposed in United States Patent No. 6658314, which includes multiple inkjet heads including a head for discharging a plurality of photo polymers having different elasticity after curing

Also, a method of fabricating a three-dimensional object has been proposed in Japanese Unexamined Patent Application Publication No. 2017-105154, which includes changing the proportion of a plurality of hydrogel precursors having respective compositions to fabricate a three-dimensional object, thereby imparting a physical property distribution in the object.

However, since the viscosity of the composition for use in fabricating a hydrogel solid freeform fabrication object changes over time, the composition is not particularly suitable for long-term storage. Therefore, it is difficult to stably and repetitively fabricate hydrogel solid freeform fabrication objects with target properties and forms. The hydrogel solid freeform fabrication object fabricated using such compositions are insufficient regarding hardness.

US-A-2017/008228 discloses a method of manufacturing a three-dimensional object including, imparting a first liquid having a first composition including a solvent and a curable material and a second liquid having a second composition to form a liquid film, curing the liquid film, and repeating the imparting and the curing to obtain the three-dimensional object, wherein the imparting position and the imparting amount of each of the first liquid and the second liquid are controlled in such a manner that the liquid film includes multiple areas where at least one of post-curing compression stress and post-curing modulus of elasticity is different.

US-A-2017/270831 discloses a solid freeform fabrication object includes a hydrogel including a polymer, water, and a coloring material inclusion substance.

### SUMMARY

According to the present disclosure, a composition for hydrogel solid freeform fabrication is provided which prevents a change in viscosity over time and maintains the viscosity over a long period of time. Also, a composition for hydrogel solid freeform fabrication is provided which can fabricate a hydrogel solid freeform fabrication object with a high level of hardness.

According to embodiments of the present disclosure, a composition for hydrogel solid freeform fabrication is provided which contains water, a water-soluble monomer comprising at least one polyfunctional monomer having a polyethylene glycol structure, a mineral, and a diamine compound, wherein the proportion of the diamine compound to the mineral is from 7.0 to 20.0 percent by mass.

As another aspect of the present disclosure, a set is provided which contains a first composition for hydrogel solid freeform fabrication and a second composition for hydrogel solid freeform fabrication, each of the first composition and the second composition containing water, a water-soluble monomer, a mineral, and a diamine compound, wherein the proportion of the diamine compound to the mineral is from 7.0 to 20.0 percent by mass, wherein at least one of the water-soluble monomer in the first composition and the water-soluble monomer in the second composition contains at least one polyfunctional monomer having a polyethylene glycol structure, wherein the proportion of the at least one polyfunctional monomer is different between the first composition and the second composition.

### BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
FIG. 1 is a schematic diagram illustrating an example of a water-swellable laminate clay mineral as a mineral and an example of a state in which a water-swellable laminate clay mineral is dispersed in water;
FIG. 2 is a schematic diagram illustrating an example of the device for fabricating a hydrogel solid freeform fabrication object;
FIG. 3 is a schematic diagram illustrating an example of a hydrogel solid freeform fabrication object being detached from a support;
FIG. 4 is a schematic diagram illustrating the position and the proportion of application of a first composition for hydrogel solid freeform fabrication and a second composition for hydrogel solid freeform fabrication;
FIG. 5 is a schematic diagram illustrating the proportion of the application amount of a first composition for hydrogel solid freeform fabrication and a second composition for hydrogel solid freeform fabrication at a predetermined dot;
FIG. 6 is a schematic diagram illustrating a cured film having a predetermined mass ratio of a cured material derived from a first composition for hydrogel solid freeform fabrication to a cured material derived from a second composition for hydrogel solid freeform fabrication at predetermined regions;
FIG. 7 is a graph showing the results of Examples 1 and 2;
FIG. 8 is a graph showing the results of the tensile test in Examples 1, 1 +7 (50), and 7;
FIG. 9 is a photo of a hydrogel solid freeform fabrication object for use in evaluating the hardness by Young's modulus;
FIG. 10 is a photo of a kidney model 1 as a hydrogel solid freeform fabrication object having a kidney-like shape; and
FIG. 11 is a photo showing a kidney model 1 from which a tumor portion is removed followed by suturing the removed portion.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### DESCRIPTION OF THE EMBODIMENTS

As used herein, the singular forms "a", "an", and "the" are intended to include the plural forms as well, unless the context clearly indicates otherwise.

Moreover, image forming, recording, printing, modeling, etc., in the present disclosure represent the same meaning, unless otherwise specified.

Embodiments of the present invention are described in detail below with reference to accompanying drawing(s). In describing embodiments illustrated in the drawing(s), specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

### 1. Composition for Hydrogel Solid Freeform Fabrication

The composition for hydrogel solid freeform fabrication of the present disclosure contains at least water, a water-soluble monomer, a mineral, and a diamine compound. It may furthermore contain other optional components such as organic solvents.

The composition for hydrogel solid freeform fabrication in the present disclosure means a liquid composition which is cured upon an application of active energy such as light or heat to form a hydrogel and particularly a liquid composition for use in fabricating a solid freeform fabrication object formed of hydrogel. In the present disclosure, hydrogel means a structure containing water in a three-dimensional network structure containing a polymer. Three-dimensional network structures formed of a complex of a polymer and mineral are referred to as organic inorganic complex hydrogel. The hydrogel contains water as the main component. The proportion of water in a hydrogel is preferably 30.0 percent by mass or greater, more preferably 40.0 percent by mass or greater, and furthermore preferably 50.0 percent by mass or greater.

### 1. Water

The composition for hydrogel solid freeform fabrication contains water. Water is not particularly limited as long as it can be used as a general-purpose solvent. Water includes pure water and hyper pure water such as deionized water, ultrafiltered water, reverse osmosis water, and distilled water.

The proportion of water can be changed according to a particular application. When a composition for hydrogel solid freeform fabrication is used for fabricating a medical model, the proportion of water in the total amount of the composition is preferably from 30.0 to 90.0 percent by mass and more preferably from 40.0 to 90.0 percent by mass.

It is suitable to dissolve or disperse other components such as organic solvents in water to impart moisture-retaining property, antibiotic property, or electroconductivity and adjust hardness.

### 2. Water-soluble Monomer

The composition for hydrogel solid freeform fabrication contains a water-soluble monomer. The water-soluble monomer is polymerized upon an application of active energy or heat to form at least a part of a polymer. The polymer has a structural unit derived from the water-soluble monomer. The polymer is complexed by cross-linking with mineral and forms a three-dimensional network structure in hydrogel. "Water-soluble" means that, for example, when 1 g of a monomer and 100 g of water at 30 degrees C are mixed and stirred, 90 percent by mass or more of the monomer is dissolved. The water-soluble monomer contained in the composition for hydrogel solid freeform fabrication of the present disclosure contains one or more types. However, it contains at least one polyfunctional monomer having a polyethylene monomer having a polyethylene glycol structure.

The water-soluble monomer is not particularly limited as long as it has a polymerizable functional group. It is preferably a compound having a photopolymerizable functional group. In the present disclosure, "polymerizable functional group" allows polymerization reaction upon an application of active energy and heat. "Photopolymerizable functional group" allows polymerization reaction particularly upon an application of active energy. The photopolymerizable functional group is not limited thereto but includes a group having an ethylenic unsaturated bond (e.g., (meth)acryloyl group, vinyl group, and allyl group) and cyclic ether groups (e.g., epoxy group). Examples of the compound having an ethylenic unsaturated bond are compounds having (meth)acrylamide group, (meth)acrylate compounds, compounds having a (meth)acryloyl group, compounds having a vinyl group, and compounds having an allyl group.

The water-soluble monomer for use in the present disclosure is preferably a compound having at least one polymerizable functional group such as unsaturated carbon-unsaturated carbon bond. It includes a mono-functional monomer and a polyfunctional monomer. The poly-functional monomer includes di-functional monomers or tri- or higher functional monomers. These can be used alone or in combination.

### Mono-functional Monomer

Specific examples of the mono-functional monomer include, but are not limited to, acrylamide, N-substituted acrylamide derivatives, N,N-di-substituted acrylamide derivatives, N-substituted methacrylamide derivatives, N-N-di-substituted methcrylamide derivatives, 2-etylhexyl(meth)acrylate (EHA), 2-hydroxyethyl(meth)acrylate (HEA), 2-hydroxypropyl(meth)acrylate (HPA), caprolactone-modified tetrahydrofurfuryl(meta)acrylate, isobonyl(meth)acrylate, 3-methoxybutyl(meth)acrylate, tetrahydro furfuryl(meth)acrylate, lauryl(meth)acrylate, 2-phenoxyethyl (meth)acrylate, isodecyl(meth)acrylate, isooctyl(meth)acrylate, tridecyl(meth)acrylate, caprolactone(meth)acrylate, and ethoxylated nonylphenol(meth)acrylate. These can be used alone or in combination. Of these, acrylamide, N,N-dimethylacrylamide, N-isopropylacrylamide, and acryloyl morpholine are preferable.

The proportion of the mono-functional monomer in the total amount of a composition for hydrogel solid freeform fabrication is preferably from 0.5 to 30.0 percent by mass. A proportion of from 0.5 to 30.0 percent by mass enhances dispersion stability of mineral in a composition for hydrogel solid freeform fabrication and improves the breaking elongation and breaking stress of a hydrogel fabricated from the composition.

### II. Polyfunctional Monomer

The polyfunctional monomer includes di-functional monomers or tri- or higher functional monomers.

The composition for hydrogel solid freeform fabrication contains at least one polyfunctional monomer having a polyethylene glycol structure as the water-soluble monomer as described above. The polyfunctional monomer having such a polyethylene glycol structure is polymerized upon an application of active energy or heat to form at least a part of a polymer. The polymer formed by polymerization of the water-soluble monomer has a structural unit derived from the water-soluble monomer, which is a polyfunctional monomer having a polyethylene glycol structure.

### A. Di-functional Monomer

Specific examples of such di-functional monomers include, but are not limited to, 1,3-butane diol (meth)acrylate (BGDZ), 1,4-butane diol di(meth)acrylate (BUDA), 1,6-hexane diol di(meth)acrylate (HDDA), 1,9-nonane diol di(meth)acrylate, ethoxy-modified bisphenol A di(meth)acrylate, and methylene bis acrylamide. These can be used alone or in combination.

### B. Tri- or higher Functional Monomer

Specific examples of the tri- or higher functional monomers include, but are not limited to, trimethylol propane tri(meth)acrylate (TMPTA), pentaerythritol tri(meth)acrylate (PETA), dipentaerythritol hexa(meth)acrylate (DPHA), tirallyl isocyanate, ε-caprolactone modified dipentaerythritol (meth)acrylate, tris(2-hydroxyethyl)isocyanulate, ethoxified trimethylol propane tri(meth)acrylate, propoxified trimethylol propane tri(meth)acrylate, propoxified glyceryl tri(meth)acrylate, pentaerythritol tetra(meth)acrylate, dipentaerythritol tetra(meth)acrylate, pentaerythritol tetra(meth)acrylate, dipentaerythritol hydroxypenta(meth)acrylate, ditrimethylol propane tetra(meth)acrylate, ethoxified(pentaerythritol tetra(meth)acrylate, and penta(meth)acrylate ester. These can be used alone or in combination.

### C. Polyfunctional Monomer Having Polyethylene Glycol Structure

The polyfunctional monomer having a polyethylene glycol structure can be di-functional monomer or tri- or higher monomer. The former is preferable.

The polyfunctional monomer having a polyethylene glycol structure has a polyethylene glycol structure represented by Chemical Formula 1 below. In Chemical Formula 1, n is preferably an integer of 4 or greater. The polyfunctional monomer having a polyethylene glycol structure has better water-solubility when n is 4 or greater. In Chemical Formula 1, n is preferably an integer of 30 or less and more preferably an integer of 23 or less.

The polyfunctional monomer having a polyethylene glycol structure can be used alone or in combination.

**-**(CH₂-CH₂-O-)ₙ- Chemical Formula 1

The proportion of the polyfunctional monomer having a polyethylene glycol structure in the total mass of a composition for hydrogel solid freeform fabrication is preferably from 0.01 to 5.0 percent by mass, more preferably from 0.01 to 3.0 percent by mass, and furthermore preferably from 0.01 to 1.0 percent by mass. A proportion of from 0.01 to 5.0 percent by mass enhances the breaking elongation and breaking stress of hydrogel fabricated from the composition.

The polyfunctional monomer having a polyethylene glycol structure is preferably a compound which is linked with a polymer formed of a water-soluble monomer other than the polyfunctional monomer having a polyethylene glycol structure as the main structure and form a network structure. That is, the composition for hydrogel solid freeform fabrication preferably contains a polyfunctional monomer having a polyethylene glycol structure and a monomer other than the polyfunctional monomer having a polyethylene glycol structure.

The proportion of the total amount of polyfunctional monomers in the total amount of a composition for hydrogel solid freeform fabrication is preferably from 0.01 to 10.0 percent by mass and more preferably from 0.01 to 5.0 percent by mass. A proportion of such polyfunctional monomers of from 0.01 to 10.0 percent by mass facilitates adjustment of the properties of hydrogel fabricated from a composition for hydrogel solid freeform fabrication.

### 3. Mineral

The composition for hydrogel solid freeform fabrication contains mineral. This mineral is not particularly limited as long as it can bond a polymer formed from the water-soluble monomer mentioned above and can be suitably selected to suit to a particular application. It includes, for example, a lamellar clay mineral, particularly water swellable lamellar clay mineral.

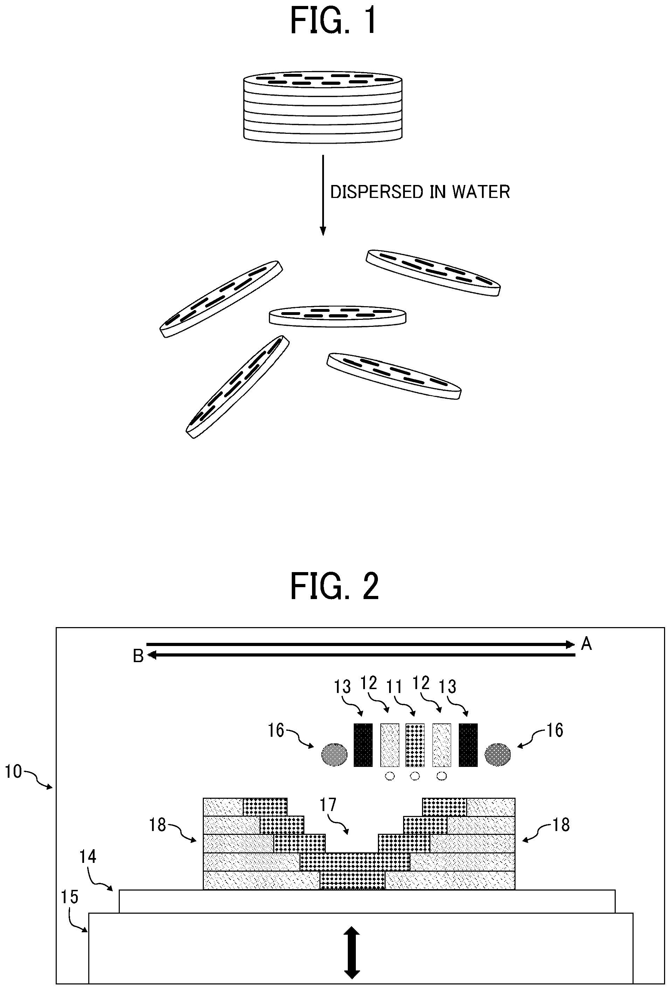

The water swellable lamellar clay mineral is described with reference to FIG. 1. FIG. 1 is a schematic diagram illustrating an example of a water-swellable lamellar clay mineral as a mineral and an example of water-swellable lamellar clay mineral dispersed in water. As illustrated in the upper diagram in FIG. 1, the water-swellable lamellar clay mineral is present in a form of a single layer and assumes a state in which two-dimensional disk-like crystals having unit cells in the crystal are stacked. Further, when the water-swellable lamellar clay mineral in the upper diagram of FIG. 1 is dispersed in water, each single layer is separated into a plurality of two-dimensional disc-like crystals as illustrated in the lower diagram in FIG. 1.

"Water swellable" means that water molecules are inserted between each layer of the lamellar clay mineral and each layer is dispersed in water as illustrated in FIG. 1. Such a single layer of a water swellable lamellar clay mineral is not limited to a disk-like shape but can take another shape.

Examples of such water swellable lamellar clay mineral are water swellable smectite and water swellable mica.

Specific examples include, but are not limited to, water swellable hectorite containing sodium as an interlayer ion, water swellable montmorillonite, water swellable saponite, and water swellable synthetic mica. These can be used alone or in combination. Of these, water swellable hectorite is preferable to obtain hydrogel having high elasticity.

Water swellable hectorite can be appropriately synthesized or procured. Specific examples of the procurable product include, but are not limited to, synthetic hectorite (LAPONITE XLG, manufactured by RockWood), SWN (manufactured by Coop Chemical Ltd.), and fluorinated hectorite SWF (manufactured Coop Chemical Ltd.). Of these, synthetic hectorite is preferable to enhance elastic modulus of hydrogel.

The proportion of the mineral in the total content of a composition for hydrogel solid freeform fabrication is preferably from 1.0 to 40.0 percent by mass and more preferably from 1.0 to 25.0 percent by mass. A proportion of mineral of from 1.0 to 40.0 percent by mass enhances elasticity and hardness of hydrogel.

### 4. Diamine Compound

The composition for hydrogel solid freeform fabrication contains a diamine compound. The diamine compound in the present disclosure has two amino groups in the molecule thereof. A least one hydrogen atom in the two amino groups can be replaced with an alkyl group such as methyl or ethyl. In fact the diamine compound includes a compound having two alkyl amino groups such as tetramethylethylene diamine (TEMED).

The composition for hydrogel solid freeform fabrication containing the diamine compound is capable of preventing a rise in viscosity over time. The following explains in theory why this prevention occurs.

The composition for hydrogel solid freeform fabrication of the present disclosure contains mineral as described above. Contained mineral dispersed at first is adsorbed to each other over time. In due course, viscosity of the composition for hydrogel solid freeform fabrication tends to rise over time. This appears prominently when the composition for hydrogel solid freeform fabrication contains a water-soluble monomer as polyfunctional monomer having a polyethylene glycol structure in addition to mineral. This rise is considered to be attributable to bonding over time between the hydrogen bond site of the polyethylene glycol structure contained in a polyfunctional monomer and the ion adsorption site of mineral. It is difficult to stably and repeatedly fabricate hydrogel solid freeform fabrication objects having desired properties and shapes if viscosity changes over time. Inferentially, the diamine compound in the composition for hydrogel solid freeform fabrication of the present disclosure seals the ion adsorption site of mineral. This sealing inhibits the bonding between the mineral and the polyethylene glycol structure contained in the polyfunctional monomer so that a rise in viscosity is prevented.

The diamine compound serves to stabilize viscosity as described above. In addition, it may serve as a polymerization initiator or a polymerization promoter.

The diamine compound preferably an aliphatic diamine compound, more preferably an aliphatic diamine compound having 2 to 18 carbon atoms, and furthermore preferably an N-alkyl substitute of an alkylene diamine compound such as ethylene diamine, propylene diamine, and butylene diamine. Examples of the diamine compounds include, but are not limited to, N,N,N',N'-tetramethylethylene diamine, N,N,N',N'-tetraethylethylene diamine, N,N,N',N'-tetrapropylethylene diamine, N, N, N-trimethylethyle diamine, N, N-dimethylethylene diamine, N, N-diethylethylene diamine, and N, N-dimethyl-1, 3-propane diamine. Of these, N,N,N',N'-tetramethylethylene diamine is preferable.

The proportion of the diamine compound to the mineral is from 7.0 to 20.0 percent by mass. A proportion of 7.0 percent by mass or more can sufficiently prevent a rise in viscosity over time. A proportion of 20.0 percent by mass or less prevents a decrease in hardness of hydrogel.

The proportion of the diamine compound in the total of a composition for hydrogel solid freeform fabrication is preferably from 0.01 to 5.0 percent by mass, more preferably from 0.01 to 3.0 percent by mass, and furthermore preferably from 0.01 to 1.0 percent by mass.

### 5. Organic Solvent

The composition for hydrogel solid freeform fabrication may furthermore optionally contain other organic solvents. The organic solvent is contained to enhance moisture-retaining property of hydrogel.

Specific examples of the organic solvent include, but are not limited to, alkyl alcohols having 1 to 4 carbon atoms, amides, ketones, ketone alcohols, ethers, polyvalent alcohols, polyalkylene glycols, lower alcohol ethers of polyvalent alcohols, alkanol amines, and N-methyl-2-pyrrolidone. These can be used alone or in combination.

Of these, polyvalent alcohols are preferable in terms of moisture-retaining property. Specific examples of organic solvents that can be suitably used include, but are not limited to, polyvalent alcohols such as ethylene glycol, propylene glycol, 1,2-propanediol, 1,2-butanediol, 1,3-butanediol, 1,4-butanediol, diethylene glycol, triethylene glycol, 1,2,6-hexanetriol, thioglycol, hexylene glycol, and glycerin.

The proportion of the organic solvent in the total amount of the composition for hydrogel solid freeform fabrication is preferably from 1.0 to 10.0 percent by mass. When the proportion of the organic solvent is 1.0 percent by mass or greater, the hydrogel is prevented from drying. A proportion of the organic solvent of 10.0 percent by mass or less uniformly disperses the mineral in the composition for hydrogel solid freeform fabrication.

### 6. Other Components

The composition for hydrogel solid freeform fabrication may furthermore optionally include other components.

The other optional components are not particularly limited and can be suitably selected to suit to a particular application. Specific examples include, but are not limited to, phosphonic acid compounds such as 1-hydroxyethane-1,1-diphosphonic acid, a stabilizer, a polymerization initiator, a colorant, a viscosity modifier, an adhesive agent, an antioxidant, an age resister, a cross-linking promoter, an ultraviolet absorbent, a plasticizer, a preservative, and a dispersant.

### I. Stabilizer

The composition for hydrogel solid freeform fabrication contains a stabilizer to stably disperse mineral. The stabilizer also keeps the composition in sol state. When the composition for hydrogel solid freeform fabrication is used in a method of discharging it as liquid droplets, stabilizers are used to stabilize the properties as liquid.

Stabilizers include, for example, highly concentrated phosphates, glycols, and non-union surfactants.

### II. Photopolymerization Initiator

Examples of the polymerization initiator are thermal polymerization initiators and photopolymerization initiators. Of these, photopolymerization initiators, which produce a radical or a cation at irradiation of active energy, are preferable in terms of storage stability.

As the photopolymerization initiator, it is possible to use any material which produces a radical at irradiation of light (ultraviolet radiation having a wavelength range of 220 to 400 nm in particular).

The thermal polymerization initiator is not particularly limited and can be suitably selected to suit to a particular application. Examples thereof include, but are not limited to, azo-based initiators, peroxide initiators, persulfate initiators, and redox (oxidation-reduction) initiators.

### III. Viscosity Modifier

Viscosity modifiers are not particularly limited and can be selected to a suitable application. A specific example is propylene glycol.

### IV Drying Retardant

Drying retardants are not particularly limited and can be suitably selected to suit to a particular application. A specific example is glycerin.

### V. Dispersant

Dispersants are not particularly limited and it can be suitably selected to suit to a particular application. A specific example is etidronic acid.

### 7. Property of Composition for Hydrogel Solid Freeform Fabrication

The property of the composition for hydrogel solid freeform fabrication is required to be stable over time to repeatedly and stably fabricate hydrogel solid freeform fabrication objects having desired properties and shapes. Of the properties, viscosity is especially required to be stable when the composition for hydrogel solid freeform fabrication is applied to liquid droplet discharging for molding in model fabrication and 3D printers (material jetting in particular).

The composition for hydrogel solid freeform fabrication of the present disclosure is stable over time regarding viscosity as described above. In fact, when the composition for hydrogel solid freeform fabrication of the present disclosure can be stored at a dark place at 25 degrees C for 30 days, the viscosity change ratio between the pre-storage viscosity and the post-storage viscosity is within 5.0 percent. The viscosity is measured at 25 degrees C and the viscosity change ratio is calculated according to the following Relationship 2. The composition for hydrogel solid freeform fabrication is stored in a sealed container. The viscosity change ratio is rated using preferably a freshly manufactured composition for hydrogel solid freeform fabrication but the composition is not limited thereto. In the case of a procured composition for hydrogel solid freeform fabrication, it can be subjected to measurement and evaluated within its recommended duration of use or duration of use estimated based on general technical knowledge. Viscosity change ratio (percent) = (Post-storage viscosity - Pre-storage viscosity) / (Pre-storage viscosity) × 100

Viscosity of the composition for hydrogel solid freeform fabrication at 25 degrees C is preferably from 3.0 to 20.0 mPa·s and more preferably from 6.0 to 12.0 mPa s. Viscosity of the composition for hydrogel solid freeform fabrication stored at 25 degrees C for 30 days is preferably within the range specified above at 25 degrees C. When the viscosity is from 3.0 to 20.0 mPa s, the composition can be suitably used for liquid droplet discharging by a 3D printer. It is particularly suitable for a 3D printer employing a material jetting method. Viscosity can be measured by, for example, a rotation viscometer (VISCOMATE VM-150 III, manufactured by TOKI SANGYO CO., LTD.).

The surface tension of the composition for hydrogel solid freeform fabrication is preferably from 20 to 45 mN/m and more preferably from 25 to 34 mN/m. A surface tension of 20 mN/m or greater enhances discharging stability of the composition. A surface tension of 45 mN/m or less facilitates filling a discharging nozzle for fabrication with the composition. The surface tension can be measured by equipment such as a surface tensiometer (automatic contact angle meter DM-701, manufactured by Kyowa Interface Science Co., LTD.)

### 2. Hydrogel

The composition for hydrogel solid freeform fabrication of the present disclosure cures and forms hydrogel upon application of active energy such as light or heat. Hydrogel means a structure that contains water in a three-dimensional network structure containing a polymer. As described above, the polymer has a structural unit derived from a water-soluble monomer. It has at least a structural unit derived from a water-soluble monomer which is a polyfunctional monomer having the polyethylene glycol structure mentioned above.

### 1. Property of Hydrogel

The property required for hydrogel depends on application of a hydrogel solid freeform fabrication object. If the hydrogel is used for a medical model for use in checking surgical training or performance of medical equipment, having a property of reproducing the sense of touch (e.g., bite and suturing) analogous to that of a live body is preferable. There is no clear method for quantitatively representing the sense of touch. However, the result of tensile test can be used as a relative indicator for a hydrogel solid freeform fabrication object used as a medical model. For example, the breaking elongation of hydrogel obtained by curing is 500 percent or greater and the breaking stress of hydrogel obtained by curing is 50 kPa or greater. Hydrogel obtained by curing is preferable when it has a breaking elongation of hydrogel obtained by curing of 500 percent or greater and a breaking stress of hydrogel obtained by curing of 50 kPa or greater at the same time.

In order to repeatedly and stably fabricate a hydrogel solid freeform fabrication object having predetermined properties, hydrogel fabricated by using a composition for hydrogel solid freeform fabrication stored at 25 degrees C for 30 days preferably has a breaking elongation of hydrogel obtained by curing of 500 percent or greater and a breaking stress of hydrogel obtained by curing of 50 kPa or greater at the same time.

The breaking elongation is calculated according to the following Relationship: (Post- tensile test length/Pre-tensile test length) × 100

The method used in a tensile test relating to the breaking stress and breaking elongation of hydrogel is, for example, as follows.

A sheet-like hydrogel having a thickness of 3 mm using a composition for hydrogel solid freeform fabrication is prepared as follows. TEFLON^{®} sheet having an inside frame of 100 mm × 100 mm with a thickness of 3 mm is prepared on a glass plate. The inside of the sheet is filled with a composition for hydrogel solid freeform fabrication followed by curing using an ultraviolet irradiator (SPOT CURE SP5-250DB, manufactured by USHIO INC.). The sheet is irradiated with, for example, a light having a wavelength of 365 nm with a cumulative exposure light amount of 350 mJ/cm². According to JIS-K6251-2010 format, a sample for tensile test is prepared by punching out dumb-bell type 3 shape from the sheet-like hydrogel.

Thereafter, the sample for tensile test is placed in a tensile tester (Autograph AGS-5kNX, manufactured by Shimadzu Corporation). The breaking elongation and breaking stress are measured at a tensile speed of 100 mm/min and a temperature of 20 degrees C.

For a tensile test using an already-fabricated hydrogel solid freeform fabrication object, a sheet-like hydrogel of 100 mm × 100 mm with a thickness of 3 mm is cut out from the hydrogel solid freeform fabrication object followed by punching out dumb-bell type 3 shape from the cut out sheet-like hydrogel to prepare a sample for tensile test. Thereafter, the breaking elongation and breaking stress are measured as described above.

When a hydrogel solid freeform fabrication object is used as a medical model, the hydrogel solid freeform fabrication object preferably has parts with different breaking elongation and breaking stress. Additive manufacturing employing material jetting using multiple liquid compositions for fabrication is employed to fabricate such a hydrogel solid freeform fabrication object having parts with different breaking elongation and breaking stress. In such additive manufacturing, regions having different proportions of water-soluble monomers are prepared in liquid film of a composition for hydrogel solid freeform fabrication formed for fabricating a hydrogel solid freeform fabrication object. The liquid film is then subjected to curing multiple times to fabricate a solid freeform fabrication object as a laminate. When the regions are individually prepared in liquid film to contain a component with different proportions such as water-soluble monomer, whose position is fixed in hydrogel at curing, the cured hydrogel has different breaking elongation and breaking stress in accordance with the proportions at the individual regions. Among these methods, the method is preferable which creates regions containing a water-soluble monomer as the polyfunctional monomer having a polyethylene glycol structure with different proportions. When the regions are prepared to have different proportions of a component having a minor proportion such as polyfunctional monomers having a polyethylene glycol structure in a composition for hydrogel solid freeform fabrication, the component has little impact regarding diffusion thereof in liquid film so that the parts expected to have different breaking elongation and breaking stress can be readily formed.

The proportion of solvent (water and organic solvent) per part in a hydrogel solid freeform fabrication object is preferably equalized as much as possible. A small difference in the proportions of a solvent minimizes transfer of the solvent between the parts. This minimizes changes in properties over time in the hydrogel solid freeform fabrication object. Regarding the small difference in proportions of a solvent, the difference in the total proportions of water and the organic solvent between the parts is preferably 5 percent by mass or less, more preferably 3 percent by mass or less, and furthermore preferably 1 percent by mass or less. It is particularly preferable when the total proportions are substantially the same.

When the breaking elongation or the breaking stress are different, the breaking elongation or breaking stress is preferably different by 10 percent or more and more preferably by 20 percent or more.

In the present disclosure, a portion with different properties in a hydrogel solid freeform fabrication object is referred to as "part". When there are portions having different compositions such as components and proportions in liquid film of a composition for hydrogel solid freeform fabrication formed in the process of fabricating a hydrogel solid freeform fabrication object and the portions with different properties in a layer formed by curing the liquid film, these portions are referred to as regions. Such a region is formed by applying multiple compositions for hydrogel solid freeform fabrication with different compositions (components, proportions, etc.) to individual portions to have different mixing ratios. The part is formed by laminating layers formed by curing liquid film having regions to manufacture a hydrogel solid freeform fabrication object.

The hardness required for a hydrogel depends on a particular application. If the hydrogel is used for a medical model for use in surgery training or performance check of medical equipment, its hardness should be suitably adjusted to reproduce properties of an internal organ such as a kidney. Although it is difficult to quantify the hardness of a fabrication object such as hydrogel obtained by using a soft and tough material, it can be determined by Young's modulus. Young's modulus can be obtained by methods such as mechanical test, resonance method, and ultrasonic pulse method. The mechanical test is especially useful to readily measure Young's modulus.

Young's modulus is preferably from 10 to 500 kPa and more preferably from 30 to 300 kPa when a hydrogel solid freeform fabrication object is used as a medical model.

Young's modulus is calculated by averaging three measuring results obtained with a softness measuring system (SOFTMEASURE Handy type HG 1003, manufactured by Horiuchi Electronics Co., Ltd.) at 25 degrees C and 50 percent RH. However, it is not limited thereto.

### 2. Application of Hydrogel Solid Freeform Fabrication Object

Hydrogel solid freeform fabrication object fabricated using the composition for hydrogel solid freeform fabrication of the present disclosure can be applied to a live body model and an internal organ model. Human internal organ models are particularly preferable. These models are preferably used as medical models for use in surgery training and performance check of medical equipment.

When the hydrogel solid freeform fabrication object is used as a human internal organ model, the proportion of water in the total amount of hydrogel forming a solid freeform fabrication object is preferably from 70 to 85 percent by mass. The proportion of from 70 to 85 percent by mass is substantially the same as that of a human internal organ as a subject of the human internal organ model. Such a hydrogel can be suitably used as a medical model. In the case of a human heart model, the proportion is preferably about 80 percent by mass. It is preferably about 83 percent by mass for a human kidney model and about 75 percent by mass for a human brain or intestine model. The proportion of water in the total amount of hydrogel is thus preferably from 75 to 83 percent by mass.

### 3. Method of Fabricating Hydrogel Fabrication Object

The method of fabricating a hydrogel solid freeform fabrication object includes curing the composition for hydrogel solid freeform fabrication of the present disclosure.

The device for fabricating hydrogel includes a device for containing the composition for hydrogel solid freeform fabrication of the present disclosure and a device for curing the composition for hydrogel solid freeform fabrication.

The method of fabricating is not particularly limited and includes a method of injecting the composition for hydrogel solid freeform fabrication into a mold having a desired shape followed by curing and a method of curing the composition for hydrogel solid freeform fabrication using a 3D printer.

Of these methods, it is preferable to use an inkjet 3D printer, a solid freeform fabrication device employing material jetting. Controlling the composition distribution and shape is easy when material jetting is employed. It is thus easy to form a device having a desired shape and properties. Since multiple compositions for hydrogel solid freeform fabrication with different compositions (e.g., component, proportion) can be used in material jetting, hydrogel solid freeform fabrication objects such as internal organ models having different portions can be readily fabricated.

The method of fabricating a hydrogel solid freeform fabrication object by material jetting is described with reference to an example of a fabrication device for fabricating a hydrogel solid freeform fabrication object.

The method of fabricating a hydrogel solid freeform fabrication object by material jetting includes applying liquid droplets of the composition for hydrogel solid freeform fabrication of the present disclosure to form liquid film, curing the liquid film of the composition for solid freeform fabrication, and sequentially repeating the applying liquid droplets and curing the liquid film. The method of fabricating a hydrogel solid freeform fabrication object may furthermore include fabricating a support for the solid freeform fabrication object and other optional processes.

The fabrication device for fabricating a hydrogel solid freeform fabrication object by material jetting includes a device (container) for containing the composition for solid freeform fabrication of the present disclosure, a liquid film forming device for forming liquid film by applying liquid droplets of the composition contained in the container, and a curing device for curing the liquid film. The fabrication device sequentially repeats forming the liquid film by the liquid film forming device and curing it by the curing device.

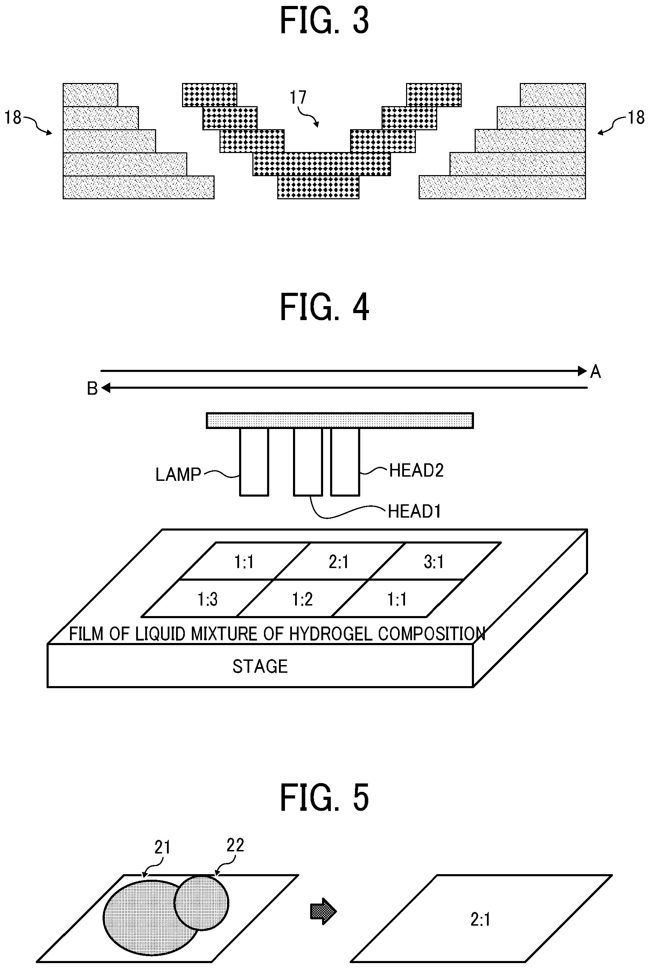

The material jetting is described with reference to FIGS. 2 and 3. FIG. 2 is a schematic diagram illustrating an example of the device (fabrication device) for fabricating a solid freeform fabrication object. FIG. 3 is a schematic diagram illustrating an example of the solid freeform fabrication object detached from a support. A fabrication device 10 for fabricating a hydrogel solid freeform fabrication object by material jetting illustrated in FIG. 2 jets a composition for hydrogel solid freeform fabrication in a container containing the composition for hydrogel solid freeform fabrication from a head unit 11 for jetting the composition for hydrogel solid freeform fabrication and a composition for support fabrication contained in a container for containing the composition for support fabrication from head units 12 for jetting the composition for support fabrication and curing the composition for hydrogel solid freeform fabrication and the composition for support fabrication from ultraviolet irradiators 13 adjacent to the head units 12. Both of the compositions are thus laminated. The composition for support fabrication cures upon an application of active energy such as light or heat and means a liquid composition for fabricating a support for supporting a solid freeform fabrication object. One specific example is acrylic-based material. The fabrication device 10 may include a flattening member 16 for flattening the jetted composition for hydrogel solid freeform fabrication.

To keep the gap between the head unit 11, the head units 12, the ultraviolet irradiators 13, a solid freeform fabrication object (hydrogel) 17, and a support material (support) 18, the fabrication device 10 lowers a stage 15 in accordance with the number of lamination while laminating the compositions.

In the fabrication device 10, the ultraviolet irradiators 13 are moved in both directions indicated by the arrows A and B. Due to the heat generated upon an application of ultraviolet radiation, the surface of the laminate is flattened, thereby improving the dimension stability of the hydrogel 17.

After the fabrication by the fabrication device 10 is complete, the hydrogel 17 and the support 18 are pulled in the horizontal direction and peeled off from each other in such a manner that the support 18 is peeled off as a whole as illustrated in FIG. 3. That is, the hydrogel 17 is readily taken out.

The fabrication device 10 may furthermore optionally include a mechanism for collecting and recycling materials. The fabrication device 10 optionally includes a blade for removing the materials attached to the nozzle surface and a detection mechanism for detecting nozzles (non-discharging nozzles) that have failed to discharge the materials. Moreover, it is preferable to include a device for controlling the environment temperature in the fabrication device 10 during fabrication.

### 1. Process of Forming Liquid Film

The method of applying the composition for hydrogel solid freeform fabrication in the liquid film forming is not particularly limited as long as liquid droplets can be applied to target positions with a suitable accuracy. It can be suitably selected to suit to a particular application and employ a known liquid discharging method. Specific examples of the liquid discharging method include, but are not limited to, a dispenser method, a spray method, and an inkjet method. Of these, the inkjet method is preferable.

The liquid droplet of the composition for hydrogel solid freeform fabrication is preferably from 2 to 60 pL and more preferably from 15 to 30 pL. A volume of the liquid droplet of 2 pL or greater enhances the discharging stability. A volume of 60 pL or less makes it easy to fill a discharging nozzle for fabrication with the composition for hydrogel solid freeform fabrication.

### 2. Curing

The curing device for curing the composition for hydrogel solid freeform fabrication in the curing includes, for example, an ultraviolet irradiation lamp and electron beams. The ultraviolet irradiation lamp includes, for example, a high pressure mercury lamp, an ultra high pressure mercury lamp, and a metal halide lamp. The ultra-high pressure mercury lamp is a point light source but if the DeepUV type combined with an optical system to have a high level of light use efficiency is used, the lamp is capable of emitting light in a short-wavelength range. Since the metal halide lamp has a wide range of wavelength, it is suitable for colored materials. Halogenated materials of metal such as Pb, Sn, and Fe are used therefor and can be selected to suit to absorption spectrum of a photopolymerization initiator. Specific examples of the lamp procurable include, but are not limited to, H lamp, D lamp, and V lamp, all of which are manufactured by Fusion System.

As the curing device for the composition for hydrogel solid freeform fabrication of the present disclosure, UV-LED (Ultra Violet-Light Emitting Diode) is suitably used. The emission wavelength of LED is not particularly limited. Wavelengths of 365 nm, 375 nm, 385 nm, 395 nm and 405 nm are used in general. Taking into account the impact of the color on a solid freeform fabrication object, light having a short wavelength is advantageous to increase the absorption of a polymerization initiator. Since a UV-LED generates less heat energy during the curing than that generated by a generally-used ultraviolet irradiation lamp (high pressure mercury lamp, ultra pressure mercury lamp, metal halide lamp) and electron beams, the heat damage to a hydrogel is reduced. Since the hydrogel fabricated from the composition for hydrogel solid freeform fabrication of the present disclosure is used with water contained inside, this effect is thus significant.

The method of fabricating a hydrogel solid freeform fabrication object includes applying liquid droplets of the composition for hydrogel solid freeform fabrication of the present disclosure to form liquid film, curing the liquid film of the composition for solid freeform fabrication, and sequentially repeating the applying liquid droplets and curing the liquid film. There is no specific limitation to the repeating number of applying and curing. It can be suitably selected to suit to the size and shape of a hydrogel solid freeform fabrication object to be fabricated. The average thickness per layer after the curing is preferably from 10 to 50 µm. An average thickness of from 10 to 50 µm enables fabricating an object with accuracy and minimizing peeling-off.

### 3. Fabricating Support

The composition for support fabrication for use in the support fabrication cures upon an application of active energy such as light or heat to fabricate a support for supporting a hydrogel solid freeform fabrication object as a solid freeform fabrication object. The ingredients (component, proportion, etc.) of the composition for support fabrication are different from those of the composition for hydrogel solid freeform fabrication of the present disclosure. In fact it preferably contains a curable material and a polymerization initiator without water or mineral. The curable material is preferably a compound that cures in polymerization reaction upon application of active energy (ultraviolet radiation, electron beams, etc.) or heat. For example, active energy curable compounds and thermosetting compounds are suitable. The curable material is preferably liquid at room temperature.

The composition for support fabrication is applied to a position different from that of the composition for hydrogel solid freeform fabrication. This means that the composition for support fabrication and the composition for hydrogel solid freeform fabrication are not overlapped. Both compositions can be adjacent to each other.

The method of applying the composition for support fabrication is the same as the method of applying the composition for hydrogel solid freeform fabrication.

### 4. Other Process

The other process includes flattening liquid film and detaching, grinding, and cleaning a solid freeform fabrication object. Inclusion of flattening liquid film is particularly preferable. In fact the liquid film formed in the liquid film forming may not have a target thickness at all the positions. For example, when liquid film is formed by inkjetting, non-discharging or difference in level of dots may occur. In such a case, fabricating a solid freeform fabrication object with high precision is difficult. To compensate this, for example, a liquid film can be mechanically flattened after the film is formed or a hydrogel thin film obtained by curing liquid film can be mechanically scraped. Alternatively, the smoothness is detected and the amount for forming the next film is adjusted at the dot level. The method of mechanically flattening liquid film is preferable for a hydrogel solid freeform fabrication object fabricated as an internal organ model because the hydrogel is relatively soft. Film can be mechanically flattened by a member such as a blade- or roller-like member.

### 5. Method of Fabricating Hydrogel Solid Freeform Fabrication Object Having Parts with Different Properties

A method of fabricating a hydrogel solid freeform fabrication object having parts with different properties is described as an aspect of the method of fabricating a hydrogel solid freeform fabrication object. In the description below, the aspect is described in detail as an embodiment in which two types of compositions having different compositions or ingredients (e.g., component, proportion) but the method is not limited to such an aspect. Man in the art easily understands other embodiments (for example, an embodiment of using three or more types of fabrication materials) based on this description. The fabrication material in the present disclosure means material used for fabricating a hydrogel solid freeform fabrication object, which is also referred to as ink for fabrication or simply ink in the present disclosure. Such fabrication material includes the composition for hydrogel solid freeform fabrication of the present disclosure. It is allowed to combine inks which can form the composition for hydrogel solid freeform fabrication of the present disclosure by mixing multiple fabrication materials.

The method of fabricating a hydrogel solid freeform fabrication object having parts with different properties includes forming liquid film having multiple regions with different compositions by applying liquid droplets of multiple compositions for hydrogel solid freeform fabrication having different components and/or proportions, curing the liquid film, and sequentially repeating the forming liquid film and curing the liquid film.

For executing the method of fabricating a hydrogel solid freeform fabrication object, a device for fabricating a hydrogel solid freeform fabrication object is used. The device includes accommodating devices (containers) for containing individual compositions for hydrogel solid freeform fabrication, a liquid film forming device for forming liquid film having multiple regions with different ingredients by applying liquid droplets of the compositions in the containers, and a curing device for curing the liquid film. It sequentially repeats the forming liquid film by the liquid film forming device and the curing by the curing device.

Specifically, using a first composition for hydrogel solid freeform fabrication of the present disclosure and a second composition for hydrogel solid freeform fabrication having different components and/or proportions from that of the first composition, liquid film having continuous multiple regions with different proportions of the first composition and the second composition is formed by controlling the amount of the applied liquid droplets of each composition and the application positions thereof. Next, this liquid film is cured to form a cured film corresponding to a single layer continuously having the regions mentioned above. Thereafter, a laminate of the cured film is formed by sequentially repeating forming and curing the liquid film to fabricate a hydrogel solid freeform fabrication object as a solid freeform fabrication object continuously having multiple parts having different breaking elongation or breaking stress. The multiple parts with different property values in a hydrogel solid freeform fabrication object may be present in a cured film corresponding to a single layer or across multiple layers of cured film.

The method of fabricating a hydrogel solid freeform fabrication object with different property values can be executed by material jetting described with reference to FIGS. 2 and 3.

### I. Liquid Film Forming for Forming Liquid Film Having Multiple Regions with Different Component and/or Proportion

The liquid film forming includes merging the first composition for hydrogel solid freeform fabrication and the second composition for hydrogel solid freeform fabrication by discharging and applying liquid droplets of the first composition for hydrogel solid freeform fabrication and liquid droplets of the second composition for hydrogel solid freeform fabrication to almost the identical positions. In the merging, liquid film having continuous regions with different proportions of the first composition and the second composition is formed by controlling the amount of both of the compositions for individual application positions.

The method of applying the first composition and the second composition is not particularly limited as long as liquid droplets are applied to a target position with an appropriate precision. The method can be suitably selected to suit to a particular application and known liquid discharging methods are suitable. The liquid discharging method includes a dispenser method, a spray method, or an inkjet method.

Of these, the dispenser method is excellent liquid quantitative property but the application area is small. The spray method is capable of simply forming a fine discharging material, has a wide application area, i.e., demonstrating excellent applicability, but the quantitative property thereof is poor so that discharged matter scatters due to the spray stream. The inkjet method has advantageous points regarding the quantitative property in comparison with the spray method and a wider application area in comparison with the dispenser method. The inkjet method is suitable for efficiently forming a complex object with accuracy. The inkjet method is thus preferable.

For a liquid droplet discharging method, it is preferable to use a device that includes a nozzle for discharging the first composition for hydrogel solid freeform fabrication and a nozzle for discharging the second composition for hydrogel solid freeform fabrication. As the nozzles, nozzles in a known inkjet printer can be suitably used. For example, MH5420/5440 (manufactured by Ricoh Co. Ltd.) can be suitably used. Such Inkjet printers are preferable because it can drip a large amount of liquid at once from its head and the application area is large, thereby accelerating the application.

### A. Set of Compositions for Hydrogel Solid Freeform Fabrication

In the present disclosure, a combined collective item containing at least a first composition for hydrogel solid freeform fabrication and a second composition for hydrogel solid freeform fabrication is referred to as a set of compositions for hydrogel solid freeform fabrication. The first composition and the second composition for hydrogel solid freeform fabrication contained in a set of compositions for hydrogel solid freeform fabrication are both the compositions for hydrogel solid freeform fabrication. However, they have different material compositions from each other. A hydrogel solid freeform fabrication object is fabricated as a solid freeform fabrication object having continuous parts having different property values. The solid freeform fabrication object is fabricated by controlling the way of discharging liquid droplets of the first composition and liquid droplets of the second composition in such a manner that both liquid droplets reach almost the identical position so as to be merged.

Each of the proportion of the first composition and the second composition in the liquid film formed in the liquid film forming can be suitably selected to suit to a particular application. The proportion can be controlled by the application amount of each composition. The application amount of each composition is calculated by multiplying the volume of a liquid droplet by the number of liquid droplets in each composition. The application of amount of each composition can be controlled by changing the volume or the number of liquid droplet.

The first composition and the second composition having different compositions or ingredients (e.g., components and/or proportions) are prepared to fabricate a hydrogel solid freeform fabrication object having parts with different property values as described above. It is preferable to prepare the first composition and the second composition such that the proportion of the water-soluble monomer therein is different from each other. It is more preferable to differentiate the proportions of the water-soluble monomers as the polyfunctional monomers having a polyethylene glycol structure.

The proportion of the solvent (water and organic solvent) in the first composition and the second composition is preferably the same as much as possible. When the proportion of the solvent in each composition is small, the difference in the solvent between the parts of a hydrogel solid freeform fabrication object to be fabricated is small. The solvent is minimally transferred between the parts, thereby preventing the change in property values in the hydrogel solid freeform fabrication object over time. Regarding the small difference in proportion of a solvent, the difference in the total proportions of water and the organic solvent between the first composition and the second composition is preferably 5 percent by mass or less, more preferably 3 percent by mass or less, and furthermore preferably 1 percent by mass or less. It is particularly preferable when the total proportions are substantially the same.

In the description above, both of the first composition and the second composition contain the water-soluble monomer as the polyfunctional monomer having a polyethylene glycol structure. However, a hydrogel solid freeform fabrication object can be fabricated having parts with different property values with a combination of a first composition for hydrogel solid freeform fabrication and a second composition for hydrogel solid freeform fabrication, where one of the two contains a water soluble monomer as the polyfunctional monomer having a polyethylene glycol structure and the other is free of a water soluble monomer as the polyfunctional monomer having a polyethylene glycol structure.

One example of the other is a composition for hydrogel solid freeform fabrication where the water-soluble monomer as the polyfunctional monomer having a polyethylene glycol structure is eliminated from the composition for hydrogel solid freeform fabrication of the present disclosure. This is a composition for hydrogel solid freeform fabrication that contains water, a water-soluble monomer free of a polyfunctional monomer having a polyethylene glycol structure, a mineral, and a diamine compound, wherein the proportion of the diamine compound to the mineral is from 7.0 to 20.0 percent by mass.

Another example of the other is a composition for hydrogel solid freeform fabrication where the water-soluble monomer as the polyfunctional monomer having a polyethylene glycol structure is eliminated from the composition for hydrogel solid freeform fabrication of the present disclosure and the proportional relationship between the diamine compound and mineral is not applied. In fact, this is a composition for hydrogel solid freeform fabrication that contains water, a water-soluble monomer free of a polyfunctional monomer having a polyethylene glycol structure, a mineral, and a diamine compound.

Another combination of the compositions for hydrogel solid freeform fabrication is the first composition and the second composition described below. The first composition contains at least water, a water-soluble monomer, and a mineral. The water soluble monomer is free of a polyfunctional monomer having a polyethylene glycol structure. The second composition contains at least water, a water-soluble monomer, and is free of a mineral. The water soluble monomer contains a polyfunctional monomer having a polyethylene glycol structure. According to this combination, when both of liquid droplets of the first composition and liquid composition of the second composition are individually discharged to almost identical positions, the liquid compositions are merged there so that liquid film of a mixture for hydrogel solid freeform fabrication containing at least water, the mineral, and the polyfunctional monomer having a polyethylene glycol structure as the water-soluble monomer. According to this combination, not both of mineral and the polyfunctional monomer having a polyethylene glycol structure as the water-soluble monomer are present in the first composition or the second composition at the same time. Viscosity of both the compositions does not rise over time. Therefore, there is no need to add a diamine compound to minimize a rise in viscosity over time.

### 4. Embodiment

An embodiment of the method of fabricating a hydrogel solid freeform fabrication object and the device for fabricating a hydrogel solid freeform fabrication object described above is described below.

First, surface data or solid data of three-dimensional form designed by three dimensional computer-aided design (CAD) or taken in by a three-dimensional scanner or a digitizer are converted into Standard Template Library (STL) format, which is thereafter input into a fabrication device.

Next, the compression stress distribution of the three dimensional shape is measured. There is no specific limitation to methods of measuring the compression stress. For example, compression stress distribution data of a three-dimensional form are obtained by using MR Elastography (MRE), which are thereafter input into the fabrication device. Based on the compression stress data, the proportion of the first composition for hydrogel solid freeform fabrication and the second composition for hydrogel solid freeform fabrication to be discharged to regions corresponding to the three-dimensional data is determined. Based on the input data, the direction of fabrication of a three-dimensional shape to be fabricated is determined. The direction is not particularly limited. Normally, the direction is chosen in which the Z direction (height direction) is the lowest.

After the direction of fabrication is determined, the projected areas in X-Y plane, X-Z plane, and Y-Z plane of the three-dimensional form are obtained to obtain a block shape thereof. The thus-obtained block shape is sliced in the Z direction with a thickness of a single layer. The thickness of a single layer changes depending on the material and is preferably from 20 to 60 µm. When only one three-dimensional object is manufactured, this block shape is arranged to be placed in the center of the Z stage (i.e., table on which the object lifted down layer by layer for each layer forming is placed). In addition, when a plurality of three-dimensional objects are fabricated at the same time, the block shapes are arranged on the Z stage. Alternatively, the block shapes can be piled up. It is possible to automatically create these block shapes, the slice data (contour line data), and the placement on the Z stage if materials to be used are determined.

Next, the liquid film forming is executed. The liquid film forming is described in detail with reference to FIGS. 4 and 5. FIG. 4 is a schematic diagram illustrating the position and the proportion of application of a first composition for hydrogel solid freeform fabrication and a second composition for hydrogel solid freeform fabrication. FIG. 5 is a schematic diagram illustrating the proportion of the application amount of a first composition for hydrogel solid freeform fabrication and a second composition for hydrogel solid freeform fabrication at a predetermined dot.

A head 1 and a head 2 illustrated in FIG. 4 are moved bidirectionally to discharge the first composition for hydrogel solid freeform fabrication and the second composition for hydrogel solid freeform fabrication to a predetermined region at a predetermined proportion of application amount to form dots. As illustrated in FIG. 5, a first composition 21 for hydrogel solid freeform fabrication and a second composition 22 for hydrogel solid freeform fabrication are merged and mixed at this point with a predetermined mass ratio (the first composition to the second composition). In the example illustrated in FIG. 5, the ratio of the first composition to the second composition is two to one.

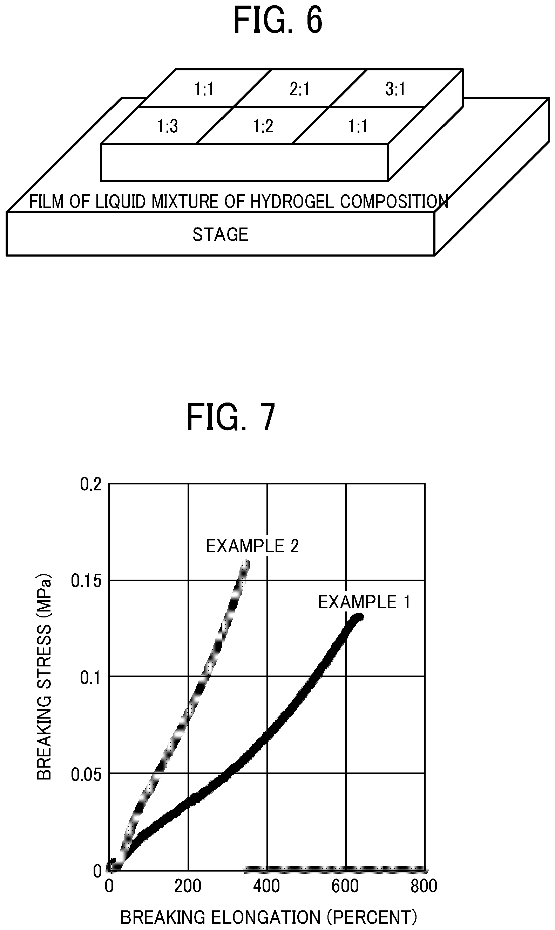

A liquid mixture film of the first composition and the second composition can be formed at a predetermined region with a predetermined mass ratio (first composition to second composition) by forming continuous dots. Thereafter, the liquid mixture film is cured upon an application of ultraviolet radiation. A cured film having a predetermined mass ratio (cured matter derived from the first composition to cured matter derived from the second composition) is formed at a predetermined region as illustrated in FIG. 6.

After a single layer of the cured film is formed, the stage 15 (FIG. 2) is lowered in an amount corresponding to the thickness of the single layer. A liquid mixture film of the first composition and the second composition can be formed at a predetermined region with a predetermined mass ratio (first composition to second composition) by forming continuous dots again. A cured film is formed by curing the liquid mixture film of the first composition and the second composition upon an application of ultraviolet radiation. The hydrogel solid freeform fabrication object as illustrated in FIG. 3 can be fabricated by repeating lamination of this cured film.

The thus-fabricated hydrogel solid freeform fabrication object has different mass ratio (cured matter derived from the first composition to cured matter derived from the second composition for individual predetermined regions in the hydrogel solid freeform fabrication object as illustrated in FIG. 6 and values of properties such as breaking elongation and breaking stress can be continuously changed therein.

As illustrated in FIG. 2, the ultraviolet radiation irradiator 13 is disposed adjacent to the head unit 11 for jetting the composition for hydrogel solid freeform fabrication and the head unit 12 for spraying the composition for support fabrication. Due to this configuration, the time taken for curing can be saved, thereby achieving high fabrication performance. In addition, using UV-LED as the UV irradiator 13 is preferable because it is effective to reduce thermal energy applied to a fabrication object during fabrication.

As illustrated in FIG. 2, a flattening member 16 is disposed adjacent to the head unit 11, the head unit 12, and the ultraviolet radiation irradiator 13. This configuration is preferable to enable controlling flattening layer by layer and the thickness for each layer.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

Next, the present disclosure is described in detail with reference to Examples but is not limited thereto.

### Manufacturing of Composition 1 for Hydrogel Solid Freeform Fabrication (Example 1)

Deionized water was subjected to deaeration under a reduced pressure for 30 minutes to prepare pure water. A total of 38.2 parts of synthetic hectorite (LAPONITE RD, manufactured by BYK) as a water swellable clay mineral was gradually added to 350 parts of this pure water during stirring. Subsequent to further stirring, a liquid mixture was obtained. Next, 1.9 parts of etidronic acid (manufactured by Tokyo Chemical Industry Co. Ltd.) was added as dispersant for the synthetic hectorite to the liquid mixture to obtain a liquid dispersion.

Next, 99.5 parts of dimethyl acrylamide (DMAA, manufactured by Tokyo Chemical Industry Co., Ltd.) purged of the polymerization inhibitor by passage through an active alumina column was added to the liquid dispersion as a water-soluble monomer. In addition, 0.7 parts of N,N'-methylene bisacrylamide (MBAA, manufactured by Tokyo Chemical Industry Co. Ltd.) as a polyfunctional monomer, and 2.3 parts of polyethylene diacrylate (A-400, manufactured by Shin-Nakamura Chemical Co., Ltd.) were added. Further, 150 parts of glycerin (manufactured by Sakamoto Yakuhin Kogyo Co., Ltd.) was admixed as a drying retardant.

Next, 2.9 parts of N,N,N',N'-tetramethylethylene diamine (TEMED, manufactured by Tokyo Chemical Industry Co., Ltd.) was added as a diamine compound. In addition, 3 parts of EMULGEN LS-106 (manufactured by Kao Corporation) was admixed as surfactant.

Next, while cooling the mixture in an ice bath, 7.5 parts of a methanol solution at 4 percent by mass of a photopolymerization initiator (Irgacure 184, manufactured by BASF Corporation) was added followed by stirring and mixed. Thereafter, the resulting mixture was subjected to deareation under a reduced pressure for 20 minutes. Subsequently, the resulting mixture was filtered to remove impurities to obtain a homogeneous liquid material 1 for hydrogel solid freeform fabrication.

### Manufacturing of Composition 2 for Hydrogel Solid Freeform Fabrication (Example 2, where example 2 is a comparative example)

Deionized water was subjected to deaeration under a reduced pressure for 30 minutes to prepare pure water. A total of 38.2 parts of synthetic hectorite (LAPONITE RD, manufactured by BYK) as a water swellable clay mineral was gradually added to 350 parts of this pure water during stirring. Subsequent to further stirring, a liquid mixture was obtained. Next, 1.9 parts of etidronic acid (manufactured by Tokyo Chemical Industry Co. Ltd.) was added as the dispersant for the synthetic hectorite to the liquid mixture to obtain a liquid dispersion.

Next, 99.5 parts of dimethyl acrylamide (DMAA, manufactured by Tokyo Chemical Industry Co., Ltd.) purged of the polymerization inhibitor by passage through an active alumina column was added to the liquid dispersion as a water-soluble monomer. Furthermore, 1.4 parts of N,N'-methylene bisacrylamide (MBAA, manufactured by Tokyo Chemical Industry Co. Ltd.) was added as a polyfunctional monomer. Further, 150 parts of glycerin (manufactured by Sakamoto Yakuhin Kogyo Co., Ltd.) was admixed as drying retardant.

Next, 2.9 parts of N,N,N',N'-tetramethylethylene diamine (TEMED, manufactured by Tokyo Chemical Industry Co., Ltd.) was added as a diamine compound. In addition, 3 parts of EMULGEN LS-106 (manufactured by Kao Corporation) was admixed as surfactant.

Next, while cooling the mixture in an ice bath, 7.5 parts of a methanol solution at 4 percent by mass of a photopolymerization initiator (Irgacure 184, manufactured by BASF Corporation) was added followed by stirring and mixed. Thereafter, the resulting mixture was subjected to deareation under a reduced pressure for 20 minutes. Subsequently, the resulting mixture was filtered to remove impurities to obtain a homogeneous liquid material 2 for hydrogel solid freeform fabrication.

The composition 2 of Example 2 was free of a water-soluble monomer as a polyfunctional monomer having a polyethylene glycol structure.

### Evaluation by Tensile Test (Examples 1 and 2)

### Preparation of Sample for Tensile Test

A sheet-like hydrogel having a thickness of 3 mm by using a composition for hydrogel solid freeform fabrication was prepared as follows. TEFLON^{®} sheet having an inside frame of 100 mm × 100 mm with a thickness of 3 mm was prepared on a glass plate. The inside of the sheet was filled with a composition for hydrogel solid freeform fabrication followed by curing using an ultraviolet irradiator (SPOT CURE SP5-250DB, manufactured by USHIO INC.). The sheet was irradiated with light having a wavelength of 365 nn with a cumulative exposure light amount of 350 mJ/cm². According to JIS-K6251-2010 format, a sample for tensile test was prepared by punching out dumb-bell type 3 shape from the sheet-like hydrogel.

### Condition for Tensile Test

Thereafter, the sample for tensile test was placed in a tensile tester (Autograph AGS-5kNX, ma Shimadzu Corporation). The sample was subjected to a tensile test at a tensile speed of 100 mm/min and a temperature of 20 degrees C.

### Result of Tensile Test

The results of breaking elongation and breaking stress of the hydrogel fabricated using each of the composition for hydrogel solid freeform fabrication of Examples 1 and 2 are shown in FIG. 7. As seen in the graph illustrated in FIG. 7, the breaking elongation was 500 percent or higher in Example 1 that contained the water-soluble monomer as the polyfunctional monomer having a polyethylene glycol structure whereas it was just about 350 percent in Example 2 that was free of a water-soluble monomer as the polyfunctional monomer having a polyethylene glycol structure.

The hydrogel fabricated using the composition of Example 1 was not torn when it was bent 180 degrees whereas the hydrogel of the composition of Example 2 was broken into two.

Judging from the results, hydrogel fabricated using a composition for hydrogel solid freeform fabrication that contains a water-soluble monomer as a polyfunctional monomer having a polyethylene glycol structure had a large breaking elongation, meaning that it is highly tough.

### Manufacturing of Compositions 3 to 7 for Hydrogel Solid Freeform Fabrication (Examples 3 to 7)

The compositions 3 to 7 for hydrogel solid freeform fabrication were obtained in the same manner as in the Manufacturing of Composition 1 for Hydrogel Solid Freeform Fabrication except that the application amount of N,N,N',N'-tetramethylethylene diamine as the diamine compound was changed to each application amount shown in Table 1.

Note that the proportion (diamine compound to mineral) of the diamine compound to the mineral was less than 7.0 percent by mass or greater than 20.0 percent by mass in the compositions 5 to 7 in Examples 5 to 7 Examples 5 to 7 are therefore comparative examples.

**Table 1**

| | | Application amount of N,N,N',N'-tetramethylethylene diamine (parts) | Diamine compound to mineral (percent by mass) |
|---|---|---|---|
| Example 1 | Composition 1 for hydrogel solid freeform fabrication | 2.9 | 7.6 |
| Example 3 | Composition 3 for hydrogel solid freeform fabrication | 5.3 | 13.9 |
| Example 4 | Composition 4 for hydrogel solid freeform fabrication | 7.6 | 19.9 |
| Example 5 | Composition 5 for hydrogel solid freeform fabrication | 1.9 | 5.0 |
| Example 6 | Composition 6 for hydrogel solid freeform fabrication | 9.5 | 24.9 |
| Example 7 | Composition 7 for hydrogel solid freeform fabrication | 0 | 0 |

### Evaluation on Viscosity Change Ratio (Examples 1 and 3 to 7)

The pre-storage viscosity of the composition for hydrogel solid freeform fabrication was measured at 25 degrees C immediately after it was manufactured. The composition for hydrogel solid freeform fabrication encapsulated in a sealed container was stored at 25 degrees C for 30 days. The post-storage viscosity of this composition was measured at 25 degrees C. The viscosity change ratio was calculated according to Relationship 2 below. The results are shown in Table 2. The viscosity was measured by E-type viscometer (ma TOKI SANGYO CO., LTD.). "Gelated" in Table 2 means that it was impossible to measure the viscosity of the composition for hydrogel solid freeform fabrication because it was gelated. "-" means that it was impossible to calculate the viscosity change ratio because the viscosity was not obtained. Viscosity change ratio (percent) = (Post-storage viscosity - Pre-storage viscosity) / (Pre-storage viscosity) × 100

**Table 2**

| | | Pre-storage | Post-storage | Viscosity change ratio (percent) |
|---|---|---|---|---|
| | | Viscosity (mPa•s) | Viscosity (mPa•s) | |
| Example 1 | Composition 1 for hydrogel solid freeform fabrication | 10.1 | 10.3 | 2.0 |
| Example 3 | Composition 3 for hydrogel solid freeform fabrication | 10.0 | 10.2 | 2.0 |
| Example 4 | Composition 4 for hydrogel solid freeform fabrication | 10.2 | 10.2 | 0 |
| Example 5 | Composition 5 for hydrogel solid freeform fabrication | 10.1 | 52.5 | 419.8 |
| Example 6 | Composition 6 for hydrogel solid freeform fabrication | 10.3 | 10.5 | 1.9 |
| Example 7 | Composition 7 for hydrogel solid freeform fabrication | 25.6 | Gelated | - |

As seen in the results shown in Table 2, a change in viscosity over time was minimized in a proportion range of the diamine compound to the mineral of 7.0 percent by mass or greater.

### Evaluation on State of Curing (Example 1 and 3 to 6

A sheet-like hydrogel having a thickness of 10 mm by using a composition for hydrogel solid freeform fabrication was prepared as follows. A container of 30 mm × 30 mm with a thickness of 10 mm was prepared. The inside of the container was filled with the composition for hydrogel solid freeform fabrication followed by curing using an ultraviolet irradiator (SPOT CURE SP5-250DB, manufactured by USHIO INC.). The composition was irradiated with light having a wavelength of 365 nm with a cumulative exposure light amount of 350 mJ/cm².

The sense of touch for the hydrogel obtained by the curing was checked and evaluated. The evaluation results are shown in Table 3.

**Table 3**

| | | Stated of curing |
|---|---|---|
| Example 1 | Composition 1 for hydrogel solid freeform fabrication | Good |
| Example 3 | Composition 3 for hydrogel solid freeform fabrication | Good |
| Example 4 | Composition 4 for hydrogel solid freeform fabrication | Good |
| Example 5 | Composition 5 for hydrogel solid freeform fabrication | Good |
| Example 6 | Composition 6 for hydrogel solid freeform fabrication | Hardness at low level due to poor curing |

As seen in the results shown in Table 3, degradation of hardness of the hydrogel caused by poor curing was minimized in a proportion range of the diamine compound to the mineral of 20.0 percent by mass or less.

### Manufacturing of Composition 8 for Hydrogel Solid Freeform Fabrication (Example 8)

Deionized water was subjected to deaeration under a reduced pressure for 30 minutes to prepare pure water. A total of 38.2 parts of synthetic hectorite (LAPONITE RD, manufactured by BYK) as a water swellable clay mineral was gradually added to 350 parts of this pure water during stirring. Subsequent to further stirring, a liquid mixture was obtained. Next, 1.9 parts of etidronic acid (manufactured by Tokyo Chemical Industry Co. Ltd.) was added as dispersant for the synthetic hectorite to the liquid mixture to obtain a liquid dispersion.

Next, 99.5 parts of dimethyl acrylamide (DMAA, manufactured by Tokyo Chemical Industry Co., Ltd.) purged of the polymerization inhibitor by passage through an active alumina column was added to the liquid dispersion as a water-soluble monomer. In addition, 0.23 parts of N,N'-methylene bisacrylamide (MBAA, manufactured by Tokyo Chemical Industry Co. Ltd.) as a polyfunctional monomer, and 0.77 parts of polyethylene diacrylate (A-400, manufactured by Shin-Nakamura Chemical Co., Ltd.) were added. Further, 150 parts of glycerin (manufactured by Sakamoto Yakuhin Kogyo Co., Ltd.) was admixed as a drying retardant.

Next, 2.9 parts by mass of N,N,N',N'-tetramethylethylene diamine (TEMED, manufactured by Tokyo Chemical Industry Co., Ltd.) was added. In addition, 3 parts of EMULGEN LS-106 (manufactured by Kao Corporation) was admixed as surfactant.

Next, while cooling the mixture in an ice bath, 7.5 parts of a 4 percent by mass methanol solution of a photopolymerization initiator (Irgacure 184, manufactured by BASF Corporation) was added, stirred and mixed, and thereafter deaerated under a reduced pressure for 20 minutes. Subsequently, the resulting mixture was filtered to remove impurities to obtain a homogeneous composition 8 for hydrogel solid freeform fabrication.

### Evaluation by Tensile Test (Example 1, Example 1 + 8, and Example 8)

The compositions for hydrogel solid freeform fabrication obtained by mixing the compositions for hydrogel solid freeform fabrication at the mass ratio shown in Table 4 were subjected to the tensile test instead of the compositions for hydrogel solid freeform used in Evaluation by Tensile Test (Examples 1 and 2) above and evaluated in the same manner as therein.

**Table 4**

| | Mass ratio at mixing | |
|---|---|---|
| | Composition 1 for hydrogel solid freeform fabrication | Composition 8 for hydrogel solid freeform fabrication |
| Example 1 | 100 | 0 |
| Examples 1 + 8 (50) | 50 | 50 |
| Example 8 | 0 | 100 |

### Result of Tensile Test

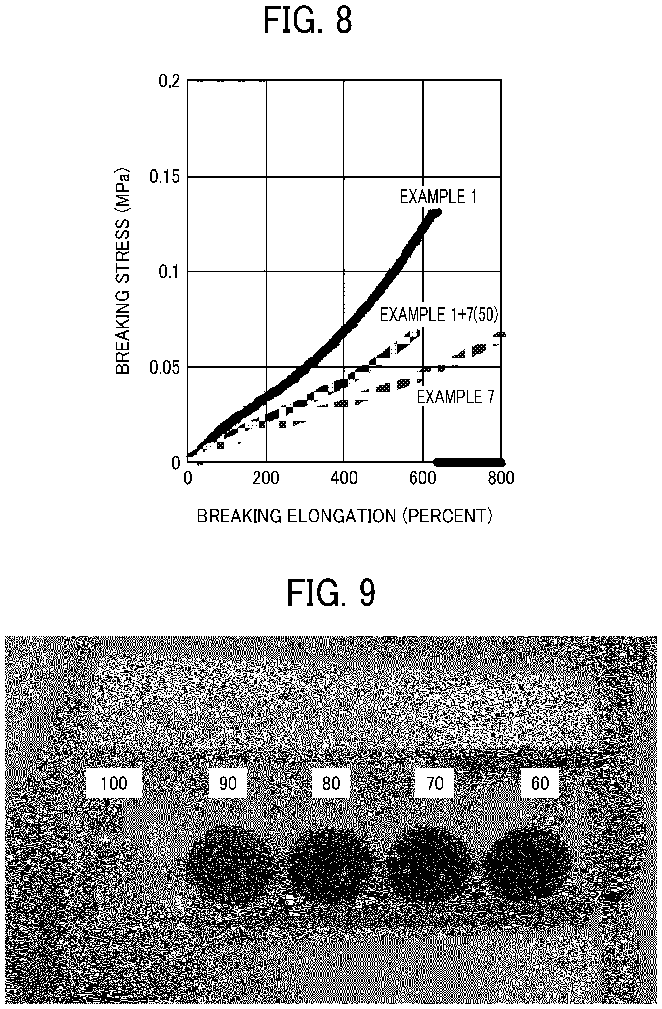

The breaking elongation and breaking stress of the hydrogel fabricated using each of the composition for hydrogel solid freeform fabrication of Examples 1, 1 + 8, and 8 are shown in FIG. 8. As seen in FIG. 8, the breaking elongation was 500 percent or more and the breaking stress was 50 kPa or more in any of the Examples. These results indicate that the breaking elongation and breaking stress can be controlled by changing the mixing ratio of the composition 1 and the composition 8.

When the compositions 1, 1 + 8, and 8 were encapsulated and stored in a sealed container at 25 degrees C for 30 days at a dark place, the results obtained were the same as above, which were a breaking elongation of 500 percent or more and a breaking stress of 50 kPa or more.

### Evaluation on Young's Modulus (Example 1, 1 + 8 (90 to 60)

### Fabrication of Hydrogel Solid Freeform Fabrication Object by Inkjetting

The composition 1 and the composition 8 were individually accommodated in an inkjet fabrication device as illustrated in FIG. 2. The inkjet head (GEN 4, manufactured by Ricoh Co. Ltd.) was filled with each of the compositions and jetted them to form liquid film followed by curing. A hydrogel solid freeform fabrication object was fabricated by repeating the liquid film forming and curing.

The hydrogel solid freeform fabrication object illustrated in FIG. 9 was fabricated by shaping it according to the date prepared in advance. The object was fabricated in such a manner that the compositions 1 and 8 jetted were merged and mixed at predetermined regions at predetermined mass ratios. The parts with values from 100 to 60 in FIG. 9 were fabricated by applying the composition 1 and the composition 8 at the mass ratio shown in Table 5 below. The part supporting the part with values from 100 to 60 at the back in FIG. 9 was constituted of the same materials as those of the parts having a value of 100. A coloring material was added to the composition 8 alone before it was placed in the fabrication device to visualize the difference in mass ratio in this evaluation.

An LED lamp (GP-75, manufactured by Hamamatsu Photonics K.K.) was used for curing with a light having a wavelength of 385 nm and a cumulative exposure light amount of 1,500 mJ/cm².

**Table 5**

| | Value in FIG. 9 | Mass ratio at mixing | |
|---|---|---|---|
| | | Composition 1 for hydrogel solid freeform fabrication | Composition 8 for hydrogel solid freeform fabrication |
| Example 1 | 100 | 100 | 0 |
| Examples 1 + 8 (90) | 90 | 90 | 10 |
| Examples 1 + 8 (80) | 80 | 80 | 20 |
| Examples 1 + 8 (70) | 70 | 70 | 30 |
| Examples 1 + 8 (60) | 60 | 60 | 40 |

### Measuring Hardness (Young's Modulus)

Young's modulus was measured at each part having a value (100 to 60) shown in FIG. 9 of the hydrogel solid freeform fabrication object. Young's modulus of the object was measured at 25 degrees C and 50 percent RH by a softness measuring system (SOFTMEASURE, Handy type, HG1003, manufactured by Horiuchi Electronics Co., Ltd.) three times. Young's modulus was obtained as the average of the three measuring results. The modulus was measured immediately after the manufacturing of the object and three days after the storage started. The hydrogel solid freeform fabrication objects were stored in LAMIZIP (manufactured by Seisan Nipponsha Ltd.) to prevent them from drying. The results are shown in Table 6.

**Table 6**

| | Measured part | Young's modulus (kPa) | |
|---|---|---|---|
| | Value in FIG. 9 | Immediately after manufacturing | 3 days after |
| Example 1 | 100 | 80 | 81 |
| Examples 1 + 8 (90) | 90 | 70 | 70 |
| Examples 1 + 8 (80) | 80 | 62 | 63 |
| Examples 1 + 8 (70) | 70 | 55 | 56 |
| Examples 1 + 7 (60) | 60 | 48 | 48 |

As seen in Table 6, Young's modulus of a part in a hydrogel solid freeform fabrication object can be controlled by changing the mixing ratio of the composition 1 and the composition 8 at the part. As seen in the distribution of Young's modulus shown in Table 6, Young's modulus was maintained even after the object was stored three days. The hydrogel solid freeform fabrication object was found to maintain Young's modulus for a long period of time.

### Manufacturing of Composition for Support Fabrication

A total of 58.0 parts by mass of 1-dodecanol (manufactured by Tokyo Chemical Industry Co., Ltd.), 48.0 parts by mass of stearyl acrylate (manufactured by Tokyo Chemical Industry Co., Ltd.), and 4.0 parts by mass of IRGACURE 819 (manufactured by BASF GmbH) were stirred, mixed, and dissolved. Thereafter, the mixture was filtered to remove impurities followed by vacuum deareation for ten minutes to obtain a homogenized composition for support fabrication.

### Evaluation by Young's Modulus (Kidney Model 1 and Kidney Model 2)

### Fabrication of Kidney Model 1

The composition 1, the composition 8, and the composition for support fabrication were individually accommodated in an inkjet fabrication device as illustrated in FIG. 2 immediately after they were manufactured. The inkjet head (GEN 4, manufactured by Ricoh Co. Ltd.) was filled with each of the compositions and jetted them to form liquid film followed by curing. The kidney model 1 as a hydrogel solid freeform fabrication object was fabricated by repeating the liquid film forming and curing.

The hydrogel solid freeform fabrication object was fabricated according to the data prepared for the kidney model in advance. The object was fabricated in such a manner that the compositions 1 and 7 jetted were merged and mixed at predetermined regions at predetermined mass ratios. The ureter portion was fabricated by the composition 1. The substantial part of the kidney model was fabricated by applying the composition 1 and the composition 8 at a mass ratio of 8 to 2. The tumor portion was fabricated by applying the composition 1 and the composition 8 at a mass ratio of 6 to 4. The support for supporting the kidney model was fabricated with the composition for support fabrication while fabricating the kidney model.

An LED lamp (GP-75, manufactured by Hamamatsu Photonics K.K.) was used for curing with a light having a wavelength of 385 nm and a cumulative exposure light amount of 150 mJ/cm².

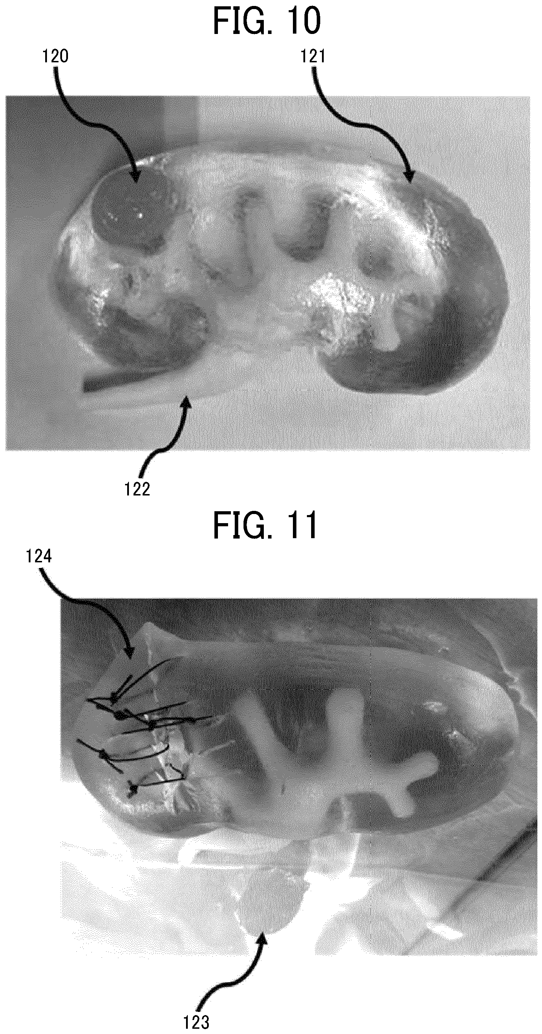

After the object was fabricated, the kidney model was detached from the support as illustrated in FIG. 3. The hydrogel solid freeform fabrication object having a kidney-like shape was thus obtained as the kidney model 1 as illustrated in FIG. 10. The kidney model 1 illustrated in FIG. 10 was composed of a tumor part 120, a substantial kidney part 121, and a ureter 122.

### Fabrication of Kidney Model 2

The kidney model 2 of the hydrogel solid freeform fabrication object having a kidney-like shape was fabricated in the same manner as in Fabrication of Kidney Model 1 except that the composition 1 and the composition 8 stored at 25 degrees C in a sealed container for 30 days at a dark place were used instead of the composition 1 and the composition 8 immediately after they were manufactured.

### Measuring Hardness (Young's Modulus)

Young's modulus was measured at the ureter part, the substantial kidney part, and the tumor part of the manufactured kidney models. Young's modulus of the object was measured at 25 degrees C and 50 percent RH by a softness measuring system (SOFTMEASURE, Handy type, HG1003, manufactured by Horiuchi Electronics Co., Ltd.) three times. Young's modulus was obtained as the average of the three measuring results. The results are shown in Table 7.

**Table 7**

| | Part | Young's modulus (kPa) |
|---|---|---|
| Kidney model 1 | Ureter | 73 |
| | Substantial kidney part | 45 |
| | Tumor | 60 |
| Kidney model 2 | Ureter | 74 |
| | Substantial kidney part | 45 |
| | Tumor | 61 |

As seen in Table 7, Young's modulus of a portion in the kidney model can be controlled by changing the mixing ratio of the composition1 and the composition 8 at the portion. Kidney models are found to be stably fabricated by material jetting even with a composition for hydrogel solid freeform fabrication 30 days after it was manufactured.

The kidney model 1 and kidney model 2 were medical models specially made for training for extracting tumors. Several doctors were asked to extract the tumor part out of the substantial kidney part and suture the extracted part using the kidney model 1 and the kidney model 2.

They successfully cut the substantial kidney parts of both kidney models open and remove the tumor parts. They also successfully pulled the substantial kidney part closer to suture the removed part. FIG. 11 is a photo showing the kidney model 1 from which the tumor part was removed followed by suturing the removed portion. The reference numerals 123 and 124 respectively represent the removed tumor part and the sutured part of the substantial kidney part. In the doctors' opinion, the sharpness of surgical knives against the substantial kidney part and the sense of touch of needle and thread during suture were analogous to those of a live body and had no problem for practical use.

## Claims

1. A composition for hydrogel solid freeform fabrication, comprising:
water;
a water-soluble monomer comprising at least one polyfunctional monomer having a polyethylene glycol structure;
a mineral; and
a diamine compound,
wherein a proportion of the diamine compound to the mineral is from 7.0 to 20.0 percent by mass.

2. The composition according to claim 1, wherein the mineral comprises a water swellable clay mineral.

3. The composition according to claim 1 or 2, wherein the diamine compound comprises N,N,N',N'-tetramethylethylene diamine.

4. The composition according to any one of claims 1 to 3, wherein a hydrogel obtained by curing the composition has a breaking elongation of 500 percent or greater, wherein the breaking elongation is determined according to the procedure described in the description.

5. The composition according to any one of claims 1 to 4, wherein a hydrogel obtained by curing the composition has a breaking stress of 50 kPa or greater, wherein the breaking stress is determined according to the procedure described in the description.

6. A method of fabricating a hydrogel solid freeform fabrication object, comprising:
curing the composition for hydrogel solid freeform fabrication of any one of claims 1 to 5.

7. The method according to claim 6, further comprising:
applying liquid droplets of the composition to form a liquid film; and
sequentially repeating the applying and the curing, wherein the curing includes curing the liquid film of the composition.

8. The method according to claim 7, wherein the liquid film has regions of the composition with different components.

9. The method according to claim 8, wherein the applying includes applying the liquid droplets of the composition with different components to the regions.

10. A set comprising:
a first composition for hydrogel solid freeform fabrication; and
a second composition for hydrogel solid freeform fabrication,
each of the first composition and the second composition, comprising:
water;
a water-soluble monomer;
a mineral; and
a diamine compound,
wherein a proportion of the diamine compound to the mineral is from 7.0 to 20.0 percent by mass,
wherein at least one of the water-soluble monomer in the first composition and the water-soluble monomer in the second composition contains at least one polyfunctional monomer having a polyethylene glycol structure,
wherein a proportion of the at least one polyfunctional monomer is different between the first composition and the second composition.

## Patentansprüche

1. Zusammensetzung zur Hydrogel-Feststoff-Freiformfertigung, Folgendes umfassend:
Wasser;
ein wasserlösliches Monomer, das mindestens ein polyfunktionelles Monomer mit einer Polyethylenglykolstruktur umfasst;
ein Mineral; und
eine Diaminverbindung,
wobei ein Verhältnis der Diaminverbindung zum Mineral 7,0 bis 20,0 Gewichtsprozent beträgt.

2. Zusammensetzung nach Anspruch 1, wobei das Mineral ein in Wasser quellbares Tonmineral umfasst.

3. Zusammensetzung nach Anspruch 1 oder 2, wobei die Diaminverbindung N,N,N',N'-Tetramethylethylendiamin umfasst.

4. Zusammensetzung nach einem der Ansprüche 1 bis 3, wobei ein durch Härten der Zusammensetzung erzieltes Hydrogel eine Bruchdehnung von 500 Prozent oder mehr aufweist, wobei die Bruchdehnung nach der in der Beschreibung beschriebenen Prozedur bestimmt wird.

5. Zusammensetzung nach einem der Ansprüche 1 bis 4, wobei ein durch Härten der Zusammensetzung erzieltes Hydrogel eine Bruchspannung von 50 kPa oder mehr aufweist, wobei die Bruchspannung nach der in der Beschreibung beschriebenen Prozedur bestimmt wird.

6. Verfahren zur Fertigung eines Hydrogel-Feststoff-Freiformfertigungsobjekts, Folgendes umfassend:
Härten der Zusammensetzung zur Hydrogel-Feststoff-Freiformfertigung nach einem der Ansprüche 1 bis 5.

7. Verfahren nach Anspruch 6, ferner Folgendes umfassend:
Aufbringen von Flüssigkeitströpfchen der Zusammensetzung, um einen Flüssigkeitsfilm zu bilden; und
sequenzielles Wiederholen des Aufbringens und des Härtens, wobei das Härten das Härten des Flüssigkeitsfilms der Zusammensetzung einschließt.

8. Verfahren nach Anspruch 7, wobei der Flüssigkeitsfilm Bereiche der Zusammensetzung mit unterschiedlichen Komponenten aufweist.

9. Verfahren nach Anspruch 8, wobei das Aufbringen das Aufbringen der Flüssigkeitströpfchen der Zusammensetzung mit unterschiedlichen Komponenten auf die Bereiche einschließt.

10. Set, Folgendes umfassend:
eine erste Zusammensetzung zur Hydrogel-Feststoff-Freiformfertigung, und
eine zweite Zusammensetzung zur Hydrogel-Feststoff-Freiformfertigung,
wobei jede von der ersten und der zweiten Zusammensetzung Folgendes umfasst:
Wasser;
ein wasserlösliches Monomer;
ein Mineral; und
eine Diaminverbindung,
wobei ein Verhältnis der Diaminverbindung zum Mineral 7,0 bis 20,0 Gewichtsprozent beträgt,
wobei mindestens eines von dem wasserlöslichen Monomer in der ersten Zusammensetzung und dem wasserlöslichen Monomer in der zweiten Zusammensetzung mindestens ein polyfunktionelles Monomer mit einer Polyethylenglykolstruktur enthält,
wobei ein Anteil des mindestens einen polyfunktionellen Monomers zwischen der ersten Zusammensetzung und der zweiten Zusammensetzung unterschiedlich ist.

## Revendications

1. Composition pour la fabrication de formes libres solides d'hydrogel, comprenant :
de l'eau ;
un monomère soluble dans l'eau comprenant au moins un monomère polyfonctionnel ayant une structure de polyéthylène glycol ;
un minéral ; et
un composé diamine,
dans laquelle un rapport du composé diamine au minéral est de 7,0 à 20,0 pour cent en masse.

2. Composition selon la revendication 1, dans laquelle le minéral comprend un minéral d'argile gonflable à l'eau.

3. Composition selon la revendication 1 ou 2, dans laquelle le composé diamine comprend de la N,N,N',N'-tétraméthyléthylènediamine.

4. Composition selon l'une quelconque des revendications 1 à 3, dans laquelle un hydrogel obtenu en faisant durcir la composition présente un allongement à la rupture égal ou supérieur à 500 pour cent, l'allongement à la rupture étant déterminé selon la procédure décrite dans la description.

5. Composition selon l'une quelconque des revendications 1 à 4, dans laquelle un hydrogel obtenu en faisant durcir la composition présente une contrainte de rupture égale ou supérieure à 50 kPa, la contrainte de rupture étant déterminée selon la procédure décrite dans la description.

6. Procédé de fabrication d'un objet de fabrication de formes libres solides d'hydrogel, comprenant :
le durcissement de la composition pour la fabrication de formes libres solides d'hydrogel selon l'une quelconque des revendications 1 à 5.

7. Procédé selon la revendication 6, comprenant en outre :
l'application de gouttelettes liquides de la composition pour former un film liquide ; et
la répétition séquentielle de l'application et du durcissement, dans lequel le durcissement inclut le durcissement du film liquide de la composition.

8. Procédé selon la revendication 7, dans lequel le film liquide présente des régions de la composition avec des composants différents.

9. Procédé selon la revendication 8, dans lequel l'application inclut l'application de gouttelettes liquides de la composition ayant des composants différents sur les régions.

10. Ensemble comprenant :
une première composition pour la fabrication de formes libres solides d'hydrogel ; et
une deuxième composition pour la fabrication de formes libres solides d'hydrogel,
chacune de la première composition et de la deuxième composition comprenant :
de l'eau ;
un monomère soluble dans l'eau ;
un minéral ; et
un composé diamine,
dans lequel un rapport du composé diamine au minéral est de 7,0 à 20,0 pour cent en masse,
dans lequel au moins l'un du monomère soluble dans l'eau dans la première composition et du monomère soluble dans l'eau dans la deuxième composition contient au moins un monomère polyfonctionnel ayant une structure de polyéthylène glycol,
dans lequel une proportion de l'au moins un monomère polyfonctionnel est différente entre la première composition et la deuxième composition.
